# FASCICULE DE BREVET EUROPEEN

(11) **EP 0 580 474 B1**
(45) Date de publication et mention de la délivrance du brevet: **16.12.1998**
(21) Numéro de dépôt: 93401799.7
(22) Date de dépôt: 09.07.1993
(51) Int. Cl.: G08G 5/00, G06F 17/00, G06F 3/023

(54) **Procédé et dispositif d'assistance au pilotage d'un aérodyne à partir d'un ensemble volumineux de documents stockés en mémoire**
Verfahren und Vorrichtung zur Steuerungshilfe eines Flugzeugs unter Verwendung einer grossen Menge von gespeicherten Dokumenten
Method and device for assisting the steering of an aircraft using a great number of documents stored in a memory

(30) Priorité: 24.07.1992 FR 9209414; 24.07.1992 FR 9209415
(43) Date de publication de la demande: 26.01.1994
(73) Titulaire: SEXTANT AVIONIQUE, 92366 Meudon la Forêt Cédex (FR)
(72) Inventeur: Oder, Engin, F-78960 Voisins le Bretonneux (FR); Pierre, Francine, F-75003 Paris (FR); Renouard, Jean-Marie, F-92210 Saint Cloud (FR)
(74) Mandataire: de Saint-Palais, Arnaud Marie

(56) Documents cités:
- EP-A- 0 413 449
- DE-A- 3 628 333
- US-A- 4 220 994
- US-A- 5 045 880
- FIRST ANNUAL PHOENIX CONFERENCE ON COMPUTERS AND COMMUNICATIONS, MAI 9 -12,1982, IEEE US pages 307 - 312 L.J.BOWE 'FLIGHT-MANAGEMENT SYSTEM CONTROL DISPLAY TECHNOLOGY IN NEW-GENERATION TRANSPORT AIRCRAFT'

## Description

La présente invention, telle qu'elle est définie dans les revendications concerne un procédé et un dispositif d'assistance au pilotage d'un aérodyne à partir d'une masse importante d'informations stockées en mémoire dans laquelle l'information se présente sous la forme de documents contenant aussi bien du texte que des images.

Le document US-A-4 220 994 divulgue un dispositif d'aide au pilotage d'un aérodyne.

Elle s applique notamment, mais non exclusivement, à l'aviation civile et commerciale où, pour faire face à l'accroissement important du trafic aérien tout en améliorant le niveau de sécurité, de nombreuses procédures et réglementations de plus en plus complexes et contraignantes ont été mises en place, tant au niveau de chaque compagnie aérienne que de chaque aéroport. Ces procédures qui aujourd'hui régissent toutes les phases d'un vol sont décrites dans des manuels imprimés que le personnel navigant a besoin de consulter à tout instant.

A l'heure actuelle, cette documentation n'est disponible que sous forme imprimée, et représente une masse de l'ordre de plusieurs dizaines de kg, difficile d'accès et à ranger, notamment à bord d'un avion où l'espace disponible est relativement réduit. Ces informations concernent par exemple, les différentes procédures à exécuter lors de chaque étape de vol, les données nécessaires à la conduite d'un vol et la surveillance des différents organes des aérodynes. Elles proviennent de sources diverses, notamment, des constructeurs d'aérodynes, des équipementiers, des fournisseurs de cartes de navigation, ou encore des compagnies aériennes.

Pour une situation particulière de l'aérodyne, toute la documentation disponible n'est pas nécessaire, et, plus cette documentation est volumineuse, plus la recherche de l'information utile est longue et difficile, ce qui n'est pas compatible avec les exigences de l'aviation.

L'invention a plus particulièrement pour but de supprimer ces inconvénients. Elle propose, à cet effet, un procédé d'assistance au pilotage d'un aérodyne, mis en oeuvre par un système comprenant un processeur, au moins un terminal de communication homme / machine comportant un écran de visualisation et des touches de commande et de saisie, et des mémoires où sont stockées notamment toutes les informations utiles à la conduite d'un vol et en particulier celles qui sont requises pour effectuer un vol conformément à la réglementation aérienne, le système étant connecté aux autres équipements électroniques embarqués à bord de l'aérodyne.
Ce procédé est caractérisé en ce qu'il comprend les étapes suivantes :
- la saisie et le rangement dans les mémoires desdites informations sous la forme d'une base de données et la fourniture à l'opérateur, par l'intermédiaire du terminal, de premiers moyens d'exploitation de ces informations ;
- l'acquisition en temps réel par le processeur d'au moins un événement relatif à la situation actuelle de l'aérodyne, et l'analyse de la situation nouvelle engendrée par l'arrivée de cet événement dans le contexte où se trouve l'aérodyne ;
- la présélection par le processeur des informations de la base de données les mieux adaptées à la nouvelle situation et leur classement par ordre de pertinence par rapport cette situation ;
- la fourniture à l'opérateur par l'intermédiaire du terminal de seconds moyens d'exploitation des informations présélectionnées et classées ;
- la sélection par l'opérateur de l'un desdits moyens d'exploitation et d'une partie des informations présélectionnées ; et
- l'exploitation sur l'écran de visualisation par l'opérateur de la partie des informations sélectionnée à l'aide du moyen d'exploitation sélectionné.

Le système informatique mis en oeuvre par le procédé est ainsi destiné à compléter les calculateurs de bord existants en mettant efficacement à la disposition de l'équipage toutes les informations utiles à la conduite d'un vol. Cette efficacité est obtenue grâce à la présélection des informations en fonction du contexte dans lequel se trouve l'aérodyne, et grâce aux moyens d'exploitation fournis par le système. Cette présélection permet d'offrir à l'opérateur un accès simplifié et rapide aux informations concernées.

Par ailleurs, on sait que les techniques actuelles de pilotage font appel à une pluralité de listes de tâches (actions- vérifications) qui indiquent aux membres de l'équipage les tâches à effectuer, ainsi que leur séquencement, pour leur permettre d'agir rapidement et de façon appropriée, quelque soit la situation de l'aérodyne, qu'elle soit habituelle ou inhabituelle.
Elles sont contenues dans des documents imprimés, dans lesquels chaque liste est repérée par un titre et comprend une succession de libellés qui indiquent chacun succinctement une tâche à exécuter.

A chacune de ces listes correspond un commentaire détaillé, situé dans un autre document. Ce commentaire porte notamment sur la liste en général et ses conditions d'utilisation, ainsi que sur les particularités de chacune des tâches de la liste.

D'une manière générale, l'utilisation de listes de tâches sous la forme d'imprimés ne garantit pas que toutes les tâches ainsi présentées ont bien été effectuées, et ce d'autant moins que ces listes sont longues et sont parfois interrompues par la nécessité d'accomplir une autre tâche.

Avantageusement, ces listes de tâches font partie de la base de données du système et sont donc susceptibles d'être présélectionnées et classées. Pour que ces listes de tâches puissent être exploitées de façon appropriée, les moyens d'exploitation mettent en oeuvre les étapes suivantes :
- l'affichage sur l'écran du terminal, sur commande de l'opérateur, de la liste de tâches qui a été présélectionnée par le système en fonction de la situation actuelle de l'aérodyne ;
- l'activation d'une touche permettant de positionner un marqueur qui désigne la première tâche de la liste à exécuter, provoquant le lancement du traitement de la liste ; et
- le déplacement dudit marqueur d'une tâche à l'autre, à la suite de l'actionnement d'une touche dudit terminal par l'opérateur, pour valider la tâche désignée par ledit marqueur lorsque celle-ci est exécutée, et pour désigner par le marqueur la tâche suivante à exécuter.

Selon une particularité de l'invention, les moyens d'exploitation comprennent des moyens pour accéder aux différentes informations stockées dans la base de données à la manière d'une bibliothèque composée de livres. Ces moyens mettent en oeuvre les étapes suivantes :
- la consultation séquentielle d'un ensemble d'informations page par page ;
- l'affichage à l'écran des tables des matières et des tables d'index de mots clés, sous la forme de menus dans lesquels l'opérateur peut effectuer une sélection en vue d'accéder instantanément aux informations correspondantes ; et
- l'activation de liens de référence entre un premier ensemble d'information que l'opérateur consulte à l'écran et d'autres ensembles d'informations, offrant à l'opérateur la possibilité de retour à l'ensemble d'informations où se situe le point de départ du lien.

Selon une autre particularité de l'invention, les moyens d'exploitation comprennent également des moyens pour mémoriser sur commande de l'opérateur, la page visualisée dans un espace mémoire prévu à cet effet, accessible rapidement et facilement.

Cet espace mémoire accessible par un terminal, permet ainsi, notamment au pilote, de rassembler, durant la phase de préparation du vol, un ensemble de pages qu'il aura besoin de consulter souvent, et donc rapidement, notamment pendant les phases de manoeuvre.

L'invention offre ainsi un moyen d'exploitation d'un volume important d'informations, facile et rapide d'emploi, parfaitement adapté aux tâches de recherche d'informations dans le contexte du pilotage d'un avion de ligne.

Un mode de mise en oeuvre du procédé selon l'invention sera décrit ci-après, à titre d'exemple non limitatif, avec référence aux dessins annexés dans lesquels :
La figure 1 est une représentation schématique de l'architecture du système de traitement d'informations embarqué à bord de l'aérodyne ;
La figure 2 représente schématiquement un terminal de communication ;
Les figures 3 à 9 représentent schématiquement différents écrans enchaînés par des exemples de moyens d'exploitation des informations stockées dans la base de données.

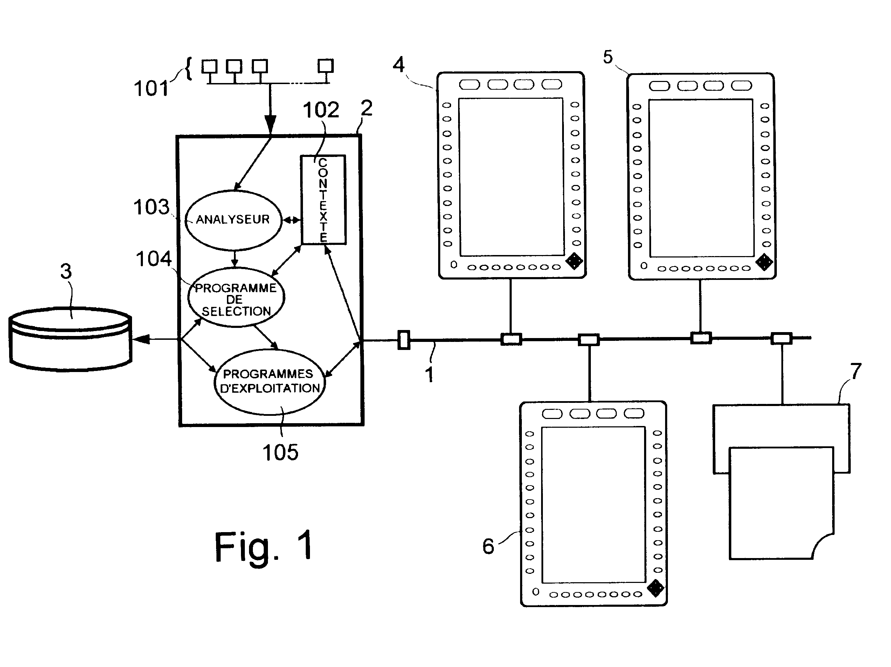

Le schéma représenté sur la figure 1 montre un exemple d'architecture d'un système de traitement d'informations destiné à être embarqué à bord d'un avion de ligne, mettant en oeuvre le procédé d'assistance au pilotage d'un aérodyne.

Ce système est constitué d'un réseau local 1 sur lequel sont connectés :
- une unité centrale 2 gérant les accès au réseau local et à la mémoire de masse 3 qui peut être constituée de plusieurs unités de type disque magnétique, optique ou magnéto-optique,
- des terminaux de communication 4,5,6, adaptés à une utilisation à bord d'un avion de ligne, et en particulier dans le poste de pilotage où l'espace disponible est relativement réduit, et
- une imprimante 7 offrant à l'opérateur la possibilité d'imprimer la page visualisée à l'écran.

L'unité centrale est raccordée par l'intermédiaire des bus de l'avion à l'ensemble 101 des capteurs et des systèmes électroniques embarqués pour acquérir en temps réel les données disponibles sur les autres équipements de bord.

La mémoire de masse 3 permet de stocker sous forme de base de données, l'ensemble des informations que l'on trouve normalement sous forme d'imprimés dans le poste de pilotage d'un avion de ligne. Ces informations concernent par exemple :
- les manuels de vol,
- la documentation associée à chaque aéroport de la zone géographique traversée, comprenant notamment la description des procédures de décollage et d'atterrissage,
- les manuels et les cartes de navigation de la zone géographique traversée, ...,
et pour chaque type d'avion,
- le manuel d'opérations,
- le manuel de description de l'équipement minimum, et
- le manuel de maintenance.

Ces informations sont fournies suivant différents formats (fichiers ASCII, images numérisées, livres) et différents supports (informatiques, papier). Elles sont ensuite converties suivant des formats standard (SGML pour les textes, CGM pour les images vectorisées, et CCITT/G4) pour les images au format bitmap) pour être intégrées dans une base de données située au sol d'où sont extraites des bases de données adaptées aux différents types d'avions.

Avant d'être embarquées pour être stockées dans la mémoire de masse 3, ces bases sont converties suivant un format prédéterminé. Les bases de données embarquées sont complétées par une base de données dite "application", qui regroupe les différents programmes d'exploitation 105 des données stockées dans ces bases. Ces programmes sont conçus pour faciliter les tâches de pilotage et aider l'équipage à résoudre les problèmes qu'il rencontre.

Ces programmes 105 constituent la traduction en langage informatique des différents scénarios suivant lesquels les informations vont être exploitées, et enchaînées les unes avec les autres.

Ils définissent notamment pour chaque étape d'exploitation :
- les informations à présenter à l'écran,
- le mode de présentation des informations,
- les touches actives du terminal et leurs fonctions respectives, c'est-à-dire, les programmes respectifs à exécuter.

L'unité centrale 2 met en oeuvre un programme dit "analyseur" 103 qui est activé lors de l'arrivée d'un événement en provenance, soit de l'environnement 101 du système, soit de l'un des terminaux 4,5,6, engendré par un opérateur lorsqu'il enfonce une touche. Ce programme a pour but d'analyser les événements qui surviennent pour gérer un ensemble de variables qui définissent le contexte temps réel 102 dans lequel se trouve l'avion. Dans le but d'analyser finement des situations complexes, il peut être conçu suivant le modèle d'un système expert, comportant une base de connaissances, une base de règles et un moteur d'inférence.

Les variables du contexte temps réel 102 concernent notamment :
- la description du vol en cours (aéroport, de départ, de destination et de dégagement, route),
- la phase de vol en cours,
- la situation de l'avion (position, altitude, vitesse),
- les pannes détectées, ...

A chaque modification du contexte temps réel 102, l'analyseur 103 déclenche un programme de sélection 104 qui, en fonction du contexte temps réel 102, établit des liens privilégiés entre les informations de la base de données les mieux adaptées aux besoins de l'équipage résultant du nouveau contexte temps réel 102, et les programmes d'exploitation 105.

Lorsqu'un opérateur déclenche un programme d'exploitation 105 en actionnant une touche de fonction d'un terminal 4,5,6, le programme d'exploitation ainsi sélectionné utilise ces liens privilégiés pour exploiter en priorité les informations les mieux adaptées au contexte temps réel de l'avion. Bien entendu l'opérateur a toujours la possibilité d'accéder aux autres informations contenues dans la base de données.

Pour accéder à la base de données, les programmes de sélection 104 et d'exploitation 105 font appel aux fonctions d'un système de gestion de base de données qui peut être d'un type courant.

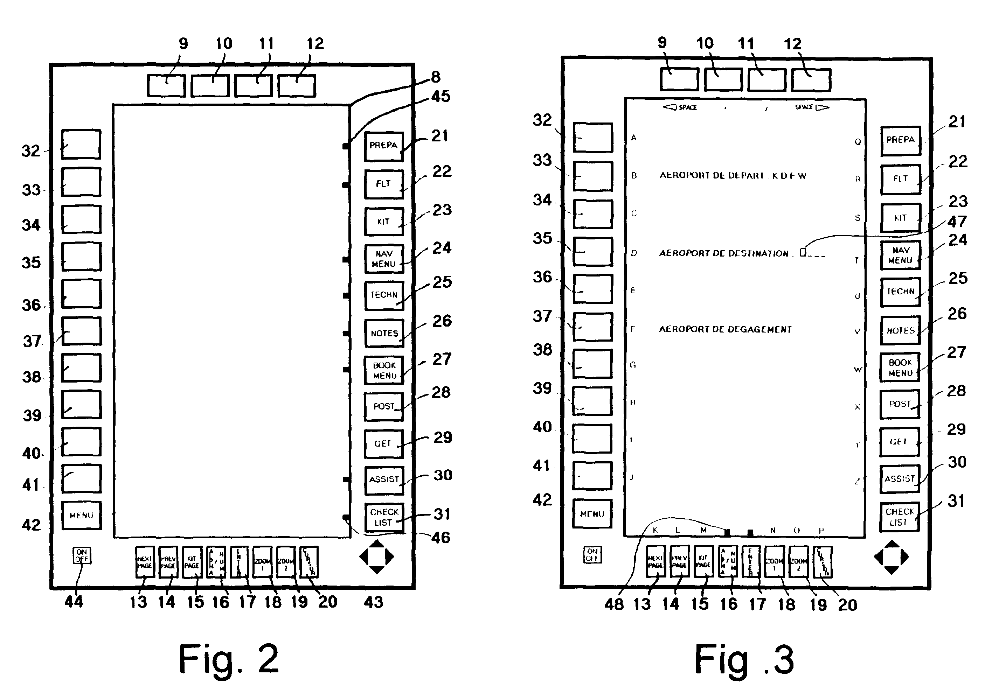

Sur la figure 2, chacun des terminaux de communication 4,5, 6, est constitué d'un écran de visualisation 8 rectangulaire autour duquel sont réparties des touches.

Certaines touches ont une fonction prédéterminée, et dans ce cas, le libellé de la fonction figure sur la touche. Toutefois, ces touches peuvent être reconfigurées en fonction de la page affichée à l'écran, soit pour activer d'autres fonctions, soit pour saisir des chaînes de caractères. Dans ce cas, le nom de la fonction affectée à chaque touche ou le caractère correspondant est indiqué sur l'écran, à proximité de la touche, ou sur la touche elle-même.

Chaque touche peut prendre deux ou trois états :
- un état inactivable lorsque la touche n'est affectée à aucune fonction,
- un état activable lorsque la touche permet d'activer une fonction, et
- un état actif lorsque la fonction prédéterminée associée à la touche est en cours d'exécution.

A proximité de chacune des touches ayant une fonction prédéterminée, se trouve un indicateur d'état 45,46 (représenté par un carré sur les figures), qui, lorsqu'il est allumé, indique que la touche est active (en blanc sur les figures) ou activable (en noir), selon la couleur de l'indicateur allumé et qui, lorsqu'il est éteint (invisible sur les figures), indique que la touche est inactivable.

Les touches qui ne sont pas affectées à une fonction prédéterminée, peuvent être, soit activables si un libellé de fonction figure à l'écran, à proximité de la touche, soit inactivables dans le cas contraire.

Les touches de la colonne de droite, 21 à 31, sont affectées au déclenchement des programmes d'exploitation 105, comme par exemple, "PREPA" 21 pour initialiser un vol ou "CHECK LIST" 31 pour l'assistance au pilotage.

Les touches 32 à 41 de la colonne de gauche permettent, en général, de procéder à des sélections lorsque des menus sont affichés à l'écran.
La dernière touche de la colonne de gauche intitulée "MENU" 42 permet d'afficher le dernier menu qui a permis d'accéder à la page courante. Cette touche peut être activée plusieurs fois de suite. Dans ce cas, les différents menus enchaînés pour accéder à la page courante sont successivement affichés jusqu'au premier menu de la fonction principale correspondante.

Les touches 13 à 20 de la rangée en dessous de l'écran permettent d'activer les fonctions liées à la gestion du terminal, comme par exemple "ENTER" 17 pour valider un choix ou une saisie, ou "CURSOR" 20 pour afficher et activer un curseur.

Les 4 touches 9 à 12 situées au dessus de l'écran indiquent dans l'ordre, les noms des 4 dernières tâches effectuées par l'opérateur. Contrairement à la touche "MENU" 42, ces tâches peuvent correspondre à des fonctions principales différentes.

Ainsi, le terminal offre deux possibilités différentes pour remonter un enchaînement de sélections effectuées par l'opérateur : les touches 9 à 12 situées au dessus de l'écran permettent de remonter chronologiquement cet enchaînement en donnant accès aux trois dernières séquences utilisées, tandis que la touche "MENU" 42 permet de remonter une arborescence d'enchaînement de menus.

Un des programmes d'exploitation permet de contrôler la phase d'initialisation d'un vol, qui a pour but notamment d'initialiser le contexte du vol.
Ce programme est activé grâce à la touche "PREPA" 21. Cette touche permet de déclencher l'affichage de l'écran représenté sur la figure 3, sur lequel apparaît le code de l'aéroport de départ "AEROPORT DE DEPART : K D F W", en principe déjà connu du système, puisqu'il correspond à l'aéroport d'arrivée du vol précédent.
La ligne affichée en dessous permet de saisir le code de l'aéroport de destination en quatre lettres maximum :
"AEROPORT DE DESTINATION : _ _ _ _".
Un curseur 47 clignote sur le premier caractère à saisir. Cette saisie est nécessaire pour définir un vol car elle permet de définir, avec la référence de l'aéroport de départ, la trajectoire de vol à suivre. Sur cet écran la plupart des touches sont reconfigurées de façon à ce que chacune d'entre elles corresponde à un caractère de l'alphabet, permettant ainsi à l'opérateur de saisir ce code. A cet effet, le caractère correspondant à chaque touche apparait sur l'écran de visualisation à proximité de la touche.
La touche "ALPHA/NUM" 16 apparait comme activable, un carré noir 48 étant affiché à côté de la touche. Cette touche permet de reconfigurer les touches de façon à pouvoir saisir des chiffres. Cette touche 16 agit à la manière d'une bascule pour passer d'un mode de saisie alphabétique à un mode de saisie numérique et réciproquement.

Dans ces modes de saisie, l'activation de la touche "ENTER" 17, qui apparait activable, permet de valider la saisie. Une fois la saisie validée par la touche "ENTER", le système va rechercher dans sa mémoire si le code d'aéroport saisi existe. S'il n'existe pas, un message d'erreur est affiché par le système et le curseur est positionné sur le premier caractère à saisir. Dans le cas contraire, le curseur se déplace sur le champ à saisir suivant qui concerne l'aéroport de dégagement :
"AEROPORT DE DEGAGEMENT : - - - -".
Cette saisie est facultative et lorsque l'opérateur a pressé la touche "ENTER" 17, l'unité centrale 2 supprime l'affectation des touches à la saisie et rend activables les trois touches 33,35,37, de la colonne de gauche situées au niveau des trois lignes où sont affichées les codes des aéroports du vol sélectionnés. Ces touches permettent de sélectionner un aéroport pour visualiser la documentation le concernant.
Comme la fonction préparation de vol est en cours de traitement, l'indicateur 45 associé à la touche "PREPA" 21 montre que la touche est active.
En outre, la touche 41 intitulée "MODIFIER UN AEROPORT", rendue également activable, permet d'une manière analogue, de modifier la saisie précédemment effectuée.

Comme précédemment mentionné, le système est connecté aux autres équipements électroniques de l'avion de façon à détecter, notamment, le décollage de l'avion pour interdire de modifier l'aéroport de départ après le décollage.

Si l'on actionne l'une des touches 31,33,35, pour sélectionner un aéroport, une liste de documents concernant l'aéroport ainsi désigné apparaît à l'écran en association avec les touches 32 à 41 de la colonne de gauche. Ces documents sont sélectionnés parmi la documentation stockée dans la base de données en fonction du type d'aéroport, de départ, de destination ou de dégagement. Ainsi par exemple, les instructions d'arrivée ne sont pas nécessaires lorsque l'opérateur demande la documentation de l'aéroport de départ.
D'autre part, la touche 9 prend la désignation de la séquence sélectionnée. Elle s'intitule par exemple "AEROPORT DE DEPART" si l'opérateur a activé la séquence "départ" dans le but de consulter la documentation concernant l'aéroport de départ.

Pour sélectionner un document, il suffit de presser la touche de la colonne de gauche située au niveau de la ligne où se trouve affiché le titre du document.
A partir de cet instant, la première page du document sélectionné est affiché à l'écran, le libellé de la première touche 9 de la ligne située au dessus de l'écran correspond au titre du document sélectionné, tandis que la deuxième touche 10 prend le libellé qu'avait la touche 9 avant que l'opérateur ait sélectionné un document, c'est-à-dire, par exemple "AEROPORT DE DEPART". En appuyant sur cette dernière touche 10, l'opérateur peut afficher à nouveau la liste des documents concernant l'aéroport sélectionné pour visualiser un autre document.

L'opérateur peut également visualiser entièrement le document qu'il a sélectionné à l'aide des touches "NEXT PAGE" 13 et "PREV. PAGE" 14 qui lui permettent d'afficher respectivement les pages suivantes et précédentes, les différentes pages d'un document étant présentées par ordre d'importance dans le contexte du vol en cours.

A ce stade, la préparation du vol consiste à sélectionner un ensemble de pages importantes pour les mémoriser de manière à pouvoir y accéder rapidement, page par page à l'aide d'une seule touche. A cet effet, le système de traitement d'informations précédemment décrit comprend également un espace mémoire permettant à l'opérateur de stocker des pages d'écran.

Cet espace mémoire comprend quatre subdivisions correspondant à différents besoins, les trois premières étant affectées respectivement aux aéroports du vol :
- la subdivision "départ" qui concerne l'aéroport de départ,
- la subdivision "destination" qui concerne l'aéroport de destination,
- la subdivision "dégagement" qui concerne l'aéroport de dégagement,
- la subdivision "libre" qui concerne tous les autres documents.

Toutes ces subdivisions sont uniques, même si le système comporte plusieurs terminaux, à l'exception de la subdivision "libre", laquelle est spécifique à chaque terminal. De cette manière, les informations mémorisées dans les subdivisions concernant les aéroports du vol sont accessibles par tous les terminaux du système, tandis que chaque terminal dispose de sa propre subdivision "libre" à laquelle il est le seul à avoir accès.

La touche de fonction d'insertion d'une page dans cet espace mémoire est activable uniquement lorsque la page affichée peut être insérée dans l'une de ces subdivisions. Seules les trois premières subdivisions sont structurées selon la documentation associée aux aéroports du vol.

N'importe quelle page peut être insérée dans la subdivision "libre" à l'exception des pages correspondant aux trois premières subdivisions.
Inversement, seules les pages correspondant à un aéroport du vol peuvent être insérées dans l'une des trois premières subdivisions.

Pour enregistrer une page affichée à l'écran dans l'une de ces subdivisions, il suffit de presser la touche "KIT PAGE" 15 et le système détermine dans quelle subdivision la page doit être mémorisée en fonction de la séquence en cours, ceci à condition que la touche en question soit activable. Par exemple, si le pilote a activé la séquence "départ" pour afficher la page courante, et s'il presse la touche "KIT PAGE" 15 activable, la page courante est mémorisée dans la subdivision "départ".
Pendant les deux secondes qui suivent l'activation de la touche, le message suivant est affiché en bas de l'écran pour indiquer à l'opérateur que sa commande a bien été prise en compte : "PAGE 1 MEMORISEE DANS LE KIT DEPART", s'il s'agit de la première page mémorisée dans la subdivision "départ".

Afin d'empêcher l'opérateur d'insérer deux fois la même page dans une subdivision, la fonction de la touche "KIT PAGE" 15 est reconfigurée en "REMOVE KIT PAGE" 54 pour supprimer la page qui vient d'être insérée.
Cette touche 15 reprendra sa fonction principale "KIT PAGE" de mémorisation de page, lors de l'affichage d'une page qui n'est pas déjà mémorisée dans une subdivision.

Si la touche "KIT PAGE" 15 est activable et qu'aucune des trois séquences correspondant aux trois premières subdivisions rattachées aux aéroports du vol n'est active, la page courante sera mémorisée dans la subdivision "libre".

Il n'y a pas de limites quant au nombre de pages mémorisées dans une subdivision, mais plus ce nombre est élevé, plus l'intérêt de cette fonction diminue, car il se posera alors un problème de sélection de la page recherchée.

Les pages sont ordonnées automatiquement dans les subdivisions en fonction de leur importance qui est définie au niveau de l'ordre dans lequel les documents et les pages à l'intérieur d'un document sont rangés dans la base de données.

Pour accéder à l'une de ces subdivisions, il suffit de presser la touche "KIT" 23 située dans la colonne à droite de l'écran.
Si une seule subdivision a été remplie, on accède directement à cette subdivision. Dans le cas contraire, c'est-à-dire, si au moins deux subdivisions sont remplies, un menu qui présente les subdivisions disponibles, associé à une partie des touches 32 à 41 de la colonne de gauche, permet d'en sélectionner une.

Lorsque l'on a pressé la touche "KIT" 23 et que au moins une page a été mémorisée dans une subdivision, l'indicateur 55 associé à cette touche 23 est dans l'état actif.

Le choix d'une subdivision dans le menu de sélection provoque l'affichage, soit de la page de la subdivision précédemment visualisée, soit de la première page de la subdivision si elle n'a jamais été consultée.
Lorsqu'une subdivision a été sélectionnée, les différentes pages qui y sont mémorisées peuvent être visualisées à l'aide de la touche "NEXT PAGE" 13 pour aller à la page suivante, et de la touche "PREV. PAGE" 14 pour aller à la page précédente. Si la première page d'une subdivision est affichée, seule la touche "NEXT PAGE" 13 est active. De même, si la dernière page d'une subdivision est affichée, seule la touche "PREV. PAGE" 14 est active.

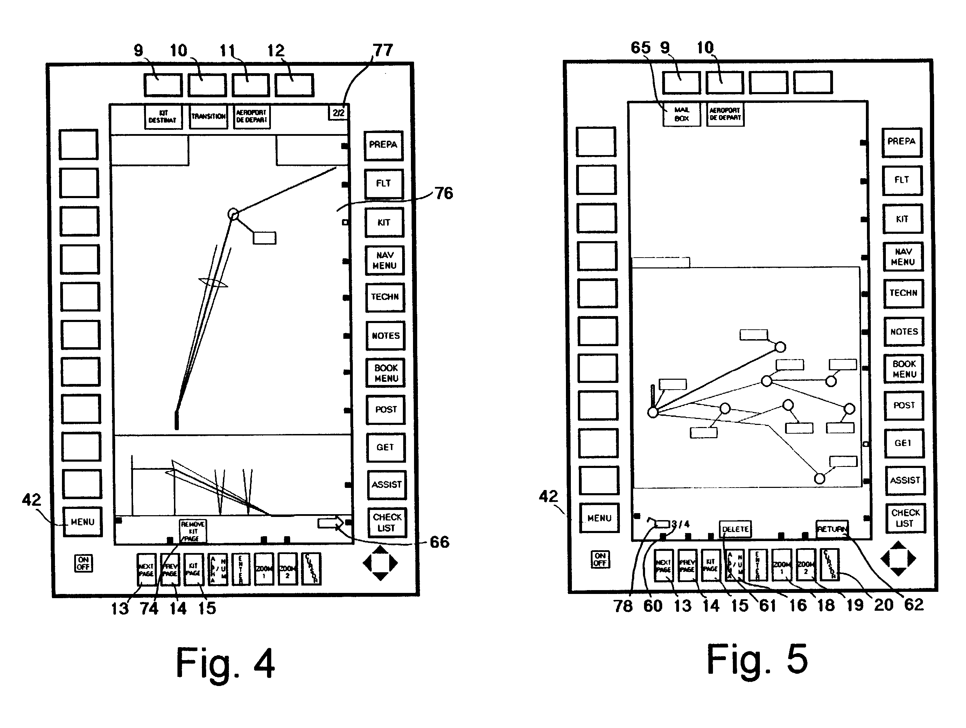

La figure 4 représente un écran obtenu en visualisant une carte d'approche 76 mémorisée dans la subdivision de destination comme l'indique la touche 9 intitulée "KIT DE DESTINATION". Les libellés des touches 10 "TRANSITION" et 11 "AEROPORT DE DEPART" indiquent que l'on était en train de visualiser le document intitulé "TRANSITION" concernant l'aéroport de départ au moment où l'on a demandé de consulter la subdivision "destination". La touche 10 permet d'afficher la page qui était affichée au moment où l'opérateur à activé la touche "KIT" 23, c'est-à-dire, une page du document intitulé "TRANSITIONS" associé à l'aéroport de départ. La touche 11 permet d'accéder à nouveau au menu de sélection d'un aéroport.

Par ailleurs, dans l'angle supérieur droit de l'écran se trouve affiché le numéro de la page dans la subdivision et le nombre de pages mémorisées dans la subdivision "2/2" 77 indiquant que la subdivision contient deux pages mémorisées et que la page affichée est la deuxième page.

Lors de l'affichage d'une page d'une subdivision (figure 4), il est également possible de l'effacer de la subdivision à l'aide de la touche "KIT PAGE" 15 reconfigurée en "REMOVE KIT PAGE" 74.
Dans cet écran, si l'on presse la touche activable "MENU" 42, le menu de sélection des subdivisions utilisées apparaît en surimpression.

Pour un système comprenant plusieurs terminaux, il est possible de sélectionner une page sur un terminal et de la mettre dans une autre subdivision appelée "boîte à lettres pour la mettre à la disposition des autres terminaux. Ceci permet à un utilisateur de préparer un document destiné à un autre utilisateur. Pour mettre un document dans cette subdivision, il suffit de presser la touche "POST" 28 disponible.
A cet instant, cette touche devient active et sur tous les terminaux du système, la touche "GET" 29 permettant de visualiser le contenu de cette subdivision devient activable, et un symbole particulier 78 apparaît sur tous les écrans (figure 5).
La touche "POST" 28 active devient disponible lorsque la page qui y a été stockée n'est plus affichée à l'écran, et inactivable si cette page est à nouveau affichée.

Cette fonction est tout particulièrement avantageuse dans le contexte d'un travail en équipage dont l'un des utilisateurs effectue le pilotage tandis que l'autre l'assiste dans son travail.

Pour visualiser le contenu de cette subdivision, il suffit de presser la touche "GET" 29 qui passe de l'état activable à actif. La dernière page insérée dans cette subdivision apparait alors à l'écran ainsi que le numéro de cette page et le nombre de pages stockées 60 (figure 5).

Au dessus de l'écran, la première touche de gauche 9 intitulée "MAIL BOX" (boite à lettres) 65 indique que l'on est en train de visualiser le contenu de la subdivision "boite à lettres".

Un autre programme permet d'assister l'équipage durant tout le vol en lui indiquant les tâches à accomplir au cours de chaque étape de pilotage. Pour activer ce programme, il suffit de presser la touche "CHECK LIST" 31 qui est active ou activable en permanence suivant la couleur de son indicateur d'état 46 qui lui est associé (par exemple, sur l'écran de la figure 2).

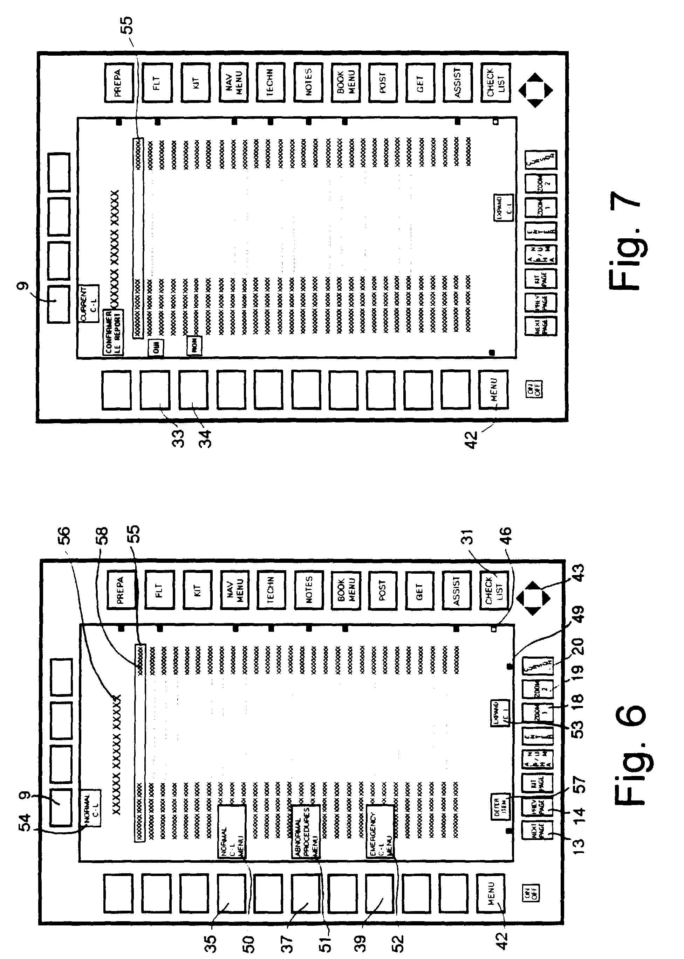

La liste de tâches de la phase de vol en cours apparait alors à l'écran (figure 6).
Elle est représentée par un titre 56 qui peut être par exemple "AVANT DEMARRAGE DES MOTEURS" qui correspond aux tâches à effectuer avant le démarrage des moteurs. Ce titre est suivi du libellé 58 sur une ligne, de chaque tâche à effectuer successivement durant la phase de vol en cours. L'indicateur 46 associé à la touche "CHECK LIST" 31 est devenu actif (représenté par un carré blanc), indiquant que la fonction associée en cours de traitement.

Trois touches 35,37,39, de la colonne à gauche de l'écran sont activables et leur fonction, respectivement 50,51,52, apparait en surimpression à proximité de ces touches. Elles permettent d'accéder aux menus de sélection des autres listes, chaque touche correspondant à un type de liste, à savoir :
- "NORMAL C-L MENU" 50 qui permet d'accéder aux autres listes dites normales ;
- "ABNORMAL PROCEDURES MENU" 51 qui permet d'accéder aux procédures anormales ;
- "EMERGENCY C-L MENU" 52 qui permet d'accéder aux listes d'urgence.

Si, par exemple, l'opérateur actionne la touche 35 lorsqu'elle est configurée en "NORMAL C-L MENU" 50, une nouvelle page est affichée à l'écran correspondant à la première des pages donnant accès à l'ensemble des listes dites normales et dont la présentation est adaptée au contexte dans lequel se trouve l'avion.
Un index qui permet de désigner une liste, apparait sous la forme d'un cadre entourant le titre soit de la liste en cours de traitement si elle existe, soit de la première liste. Cet index peut être déplacé à l'aide de la touche de déplacement 43, les quatre sens étant activables.
Lorsque deux titres de liste sont affichés sur la même ligne, cela signifie que les deux listes correspondent à la même phase de vol. Dans ce cas, la sélection de l'une de ces deux listes est effectuée, soit par l'opérateur, soit automatiquement par le système en fonction du contexte de l'avion à la fin du traitement de la liste précédente.

Pour visualiser l'ensemble des titres des listes normales, il suffit de presser les touches "NEXT PAGE" 13 et "PREV. PAGE" 14 pour afficher respectivement les pages suivantes et précédentes. Ces touches sont activables seulement lorsque l'opération ainsi déclenchée est exécutable : par exemple, la touche "PREV. PAGE" 14 pour afficher la page précédente n'est pas activable si la page affichée est la première de la liste.

Pour valider un choix, il suffit de presser la touche activable "ENTER" 17 et la liste sélectionnée apparait à l'écran.
La touche 9 intitulée "NORMAL C-L" 62 indique que la liste des listes normales est présente à l'écran.
Dans cet état, le menu de sélection d'un type de liste 50,51,52 est toujours accessible, mais il ne donne alors accès qu'aux procédures anormales 51 et aux listes d'urgence 52.

Lorsque la liste correspondant à la phase de vol en cours est affichée, la touche "CURSOR" 20 est associée à un indicateur activable 49 et permet de faire apparaître un index 55 de ligne représenté par un cadre entourant le libellé de la première tâche à exécuter de la liste (figure 6). Si cette touche est activée, la touche 9 intitulée "NORMAL C-L" 54 pour indiquer que la liste affichée est de type "normal" devient "CURRENT C-L" de manière à indiquer qu'une liste de tâches est en cours de traitement. Cette opération entraîne également la disparition du menu 50,51,52 qui était affiché en surimpression. Il est cependant possible de l'afficher à nouveau en actionnant la touche "MENU" 42 indiquée comme étant activable.

Le déplacement de l'index 55 sur les différentes tâches de la liste est commandé à l'aide de la touche de déplacement 43, seule la commande déplacement vers le bas étant activable. L'actionnement de cette touche permet d'indiquer au système que la tâche désignée par l'index est achevée, ce qui a pour effet de valider cette tâche et de positionner le curseur sur la tâche suivante. C'est le seul mouvement autorisé pour l'index. De plus, une temporisation permet d'éviter un saut de ligne par inadvertance.
Une telle gestion du curseur 55 permet de garantir que toutes les tâches présentées dans une liste ont été exécutées.

La touche "NEXT PAGE" 13, activable, permet d'accéder d'abord à la suite de la liste, si elle n'est pas entièrement affichée, puis à la liste normale suivante. La touche "CHECK LIST" 31 permet à tout instant d'afficher la partie de la liste de tâches où se trouve l'index 55.

La touche "ZOOM 1" 18 est reconfigurée en "EXPAND C-L" 53 et permet d'afficher sur une autre page, les commentaires associés à la liste en cours. Si l'opérateur presse cette touche "ZOOM 1" 18, une nouvelle page est affichée à l'écran comportant le titre de la liste précédemment affichée et ses libellés de tâches, ainsi que des commentaires intercalés entre le titre et le premier libellé de tâche et à la suite de chaque libellé. Ces commentaires donnent des informations supplémentaires concernant tout d'abord, la liste en général, puis chaque tâche de la liste.
Dans cet état, l'opérateur a la possibilité d'afficher les pages suivantes et précédentes, donnant accès à l'ensemble des commentaires associés à cette liste, respectivement à l'aide des touches "NEXT PAGE" 13 et "PREV. PAGE" 14. Si la première page des commentaires de la liste est affichée, seule la touche "NEXT PAGE" 13 est activable. Il a également la possibilité d'agrandir une partie de l'écran à l'aide des touches "ZOOM 1" 18 et "ZOOM 2" 19 devenues activables.
Si la touche 18 est actionnée lorsque la liste en cours de traitement est présente à l'écran, et si tous les commentaires de la liste ne tiennent pas dans une page d'écran, la page affichée contient en priorité le titre de la liste et les commentaires associés, puis le libellé de la tâche en cours de traitement et ses commentaires.

La première touche 9 de la rangée supérieure est alors devenue "EXPANDED C-L" 59, indiquant que la page affichée est une liste de tâches commentée.
La touche "ENTER" 17, activable, permet de revenir à l'écran précédent (figure 6).

D'une manière générale, lorsque l'index 55 désignant la tâche en cours d'exécution n'est pas présent sur l'écran, il suffit d'actionner la touche "CHECK LIST" 31. Cette touche permet d'afficher la liste courante, et en surimpression, le menu de sélection d'un autre type de liste 50,51,52, quelque soit la page présente à l'écran.

Lorsque l'opérateur a actionné la touche de déplacement 43, l'index 5 étant positionné sur la dernière tâche de la liste, le traitement de la liste en cours est alors terminé et le titre de la liste suivante apparait à l'écran encadré par l'index 55.
Si la touche de déplacement 43 est à nouveau actionnée, la liste de tâches correspondant à la phase de pilotage suivante apparaît alors à l'écran. Parfois, deux listes de tâches correspondent à la même phase de pilotage. Dans ce cas, si le contexte géré par l'unité centrale permet d'effectuer la sélection entre ces deux liste, la liste sélectionnée apparaît à l'écran. Si l'unité centrale ne peut décider quelle liste de tâches doit être exécutée, un menu de sélection est présenté à l'opérateur et la liste sélectionnée grâce à ce menu est alors affichée.

Sur l'écran représenté sur la figure 6, la touche "PREV. PAGE" 14 a été reconfigurée pour s'intituler "DEFER ITEM" 57. Si cette touche est actionnée, le traitement de la tâche désignée par l'index 55 est reportée, et l'index vient alors encadrer le libellé de la tâche suivante (figure 7).
A cet instant, il est demandé à l'opérateur de confirmer le report de la tâche désignée par l'index 55. A cet effet, les touches 33,34 intitulées "OUI" et "NON", permettent de valider ou non ce report.

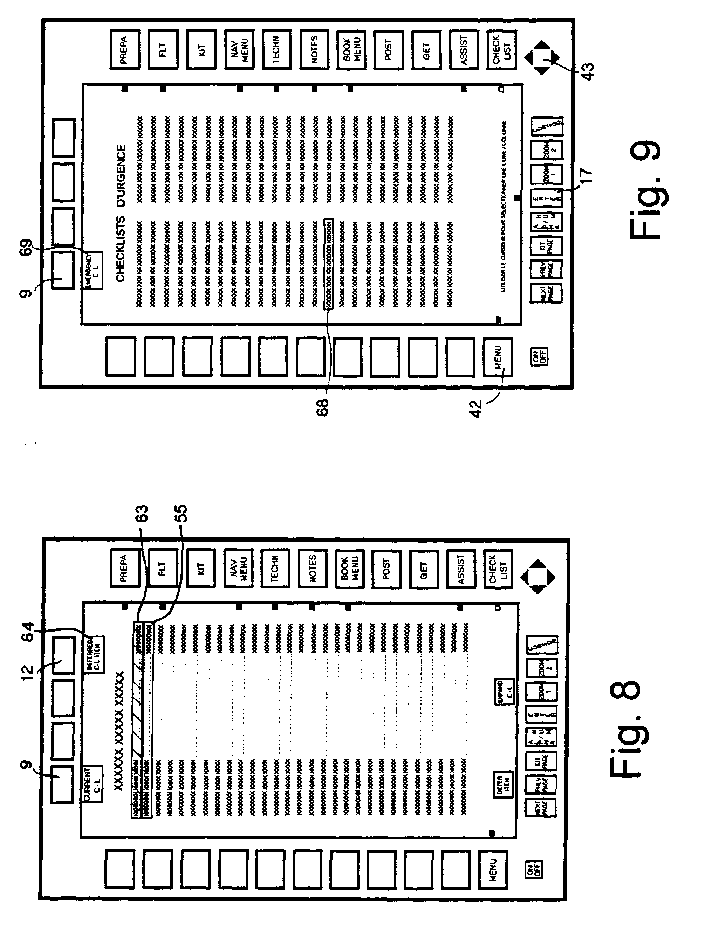

Si l'opérateur décide finalement de ne pas reporter la tâche désignée par l'index, il actionne la touche "NON" 34 et l'écran reprend l'aspect précédent (figure 6) comme si la touche 14 reconfigurée en "DEFER ITEM" n'avait jamais été actionnée.
En revanche, si l'opérateur actionne la touche 33 intitulée "OUI" pour confirmer sa demande de report d'exécution de tâche, comme il est représenté sur la figure 8, la ligne contenant le libellé de la tâche reportée reste marquée, mais, cette fois-ci, par un cadre plein 63 (représenté en hachuré), et l'index 55 est positionné sur la tâche suivante.
La touche 12 prend alors la dénomination "DEFERRED C-L ITEM" 65 indiquant qu'au moins une tâche a été reportée et le traitement de la liste peut alors se poursuivre comme précédemment décrit.

A un moment stratégique dans le déroulement du vol, il peut être demandé à l'opérateur, par un message affiché en bas de l'écran, d'exécuter les tâches reportées.
Cela signifie que, à cet instant, pour poursuivre le traitement des listes de tâches, il faut que les tâches reportées soient d'abord exécutées et validées. La touche de déplacement de l'index 43 est alors désactivée.
En effet, les consignes de sécurité exigent que toutes les actions soient accomplies à des moments précis et notamment avant d'entreprendre certaines phases de vol (roulage, décollage, atterrissage).

Pour que la touche de déplacement 43 soit à nouveau activable, il faut actionner la touche 12 intitulée "DEFERRED C-L ITEM", ce qui a pour effet de faire apparaître la page contenant la première tâche reportée. Une action sur la touche de déplacement 43 permet de faire disparaître, les uns après les autres et dans l'ordre où ils apparaissent dans les listes, les marqueurs 63 entourant les tâches reportées de manière à les valider.

Lorsque toutes les tâches reportées sont validées, l'intitulé "DEFERRED C-L ITEM" 64 disparaît et la touche 12 devient inopérante. Le séquencement des listes est alors restauré, rendant possible l'affichage et la mise en traitement de la liste suivante.

Cette fonction de report de tâche introduit davantage de souplesse dans le procédé ainsi décrit tout en garantissant que toutes les tâches sont exécutées avant d'entamer une phase de vol critique.

D'autre part, lorsque l'opérateur interrompt le traitement d'une liste pour activer une autre fonction principale du terminal, l'indicateur d'état 46 de la touche "CHECK LIST" 31 clignote lentement pour lui rappeler que le traitement d'une liste n'est pas terminé.

Par ailleurs, lorsque l'unité centrale 2 reçoit un événement anormal correspondant par exemple à une panne, de l'un des autres équipements électroniques embarqués, une flèche 66 pointant sur la touche "CHECK LIST" 31 est affichée à l'écran (figure 4). Cette flèche a pour but d'inciter l'opérateur à appuyer sur cette touche. Si, dans cet état, la touche "CHECK LIST" 31 est actionnée, l'écran représenté sur la figure 9 apparaît. Cet écran représente la liste des titres des listes de tâches d'urgence, et un index 68 est prépositionné sur le titre de la liste à exécuter pour réagir de manière correcte à la panne.
Cette disposition permet d'indiquer à l'opérateur la liste la mieux adaptée au contexte, tout en lui laissant le choix de sélectionner une autre liste à l'aide de la touche de déplacement 43. Lorsque l'opérateur appuie sur la touche "ENTER" 17, la liste ainsi sélectionnée apparaît à l'écran pour pouvoir être traitée de la même manière que la liste présentée sur la figure 6. Cependant, en fin de traitement de la liste, l'unité centrale 2 peut enchaîner d'autres listes de tâches en fonction de l'évolution de cette situation anormale.
Grâce à ces dispositions, les listes de tâches d'urgence sont accessibles rapidement, indépendamment de leur fréquence d'utilisation en tenant compte du contexte du vol.

## Revendications

1. Procédé d'assistance au pilotage d'un aérodyne, mis en oeuvre par un système comprenant un processeur (2), au moins un terminal de communication homme / machine (4,5,6) comportant un écran de visualisation (8) et des touches de commande et de saisie (9 à 44), et des mémoires (3) où sont stockées notamment toutes les informations utiles à la conduite d'un vol et en particulier celles qui sont requises pour effectuer un vol conformément à la réglementation aérienne, le système étant connecté aux autres équipements électroniques (101) embarqués à bord de l'aérodyne,
caractérisé en ce que ledit procédé comprend les étapes suivantes :
- la saisie et le rangement dans les mémoires (3) desdites informations sous la forme d'une base de données et la fourniture à l'opérateur, par l'intermédiaire du terminal (4,5,6), de premiers moyens d'exploitation de ces informations (105) ;
- l'acquisition en temps réel par le processeur (2) d'au moins un événement relatif à la situation actuelle de l'aérodyne, et l'analyse de la situation nouvelle (102) engendrée par l'arrivée de cet événement dans le contexte où se trouve l'aérodyne ;
- la présélection par le processeur (2) des informations de la base de données les mieux adaptées à la nouvelle situation et leur classement par ordre de pertinence par rapport à cette situation ;
- la fourniture à l'opérateur, par l'intermédiaire du terminal, de seconds moyens d'exploitation (105) des informations présélectionnées et classées ;
- la sélection par l'opérateur de l'un des moyens d'exploitation (105) et d'une partie desdites informations présélectionnées ; et
- l'exploitation sur l'écran de visualisation (8) par l'opérateur de la partie des informations sélectionnée à l'aide du moyen d'exploitation sélectionné.

2. Procédé selon la revendication 1,
caractérisé en ce que la base de données comprend une pluralité de listes de tâches, chaque liste indiquant, pour une situation déterminée, l'ensemble des tâches à effectuer et leur séquencement, ledit procédé comprenant :
- la présélection de la liste de tâches la mieux adaptée à la situation de l'aérodyne,
- l'affichage, par le processeur (2) sur l'écran (8) dudit terminal (4,5,6), sur commande de l'opérateur, de la liste présélectionnée,
- l'activation, par le processeur (2), d'une première touche (20) permettant de positionner un marqueur (55) qui désigne la première tâche à exécuter de la liste affichée à l'écran (8), provoquant le lancement du traitement de la liste ; et
- le traitement de la liste, au cours duquel ledit marqueur (55) se déplace d'une tâche à l'autre, et au cours duquel l'opérateur doit actionner une seconde touche (43) dudit terminal pour valider la tâche désignée par ledit marqueur (55) lorsque celle-ci est exécutée, le marqueur (55) désignant alors la tâche suivante.

3. Procédé selon la revendication 2,
caractérisé en ce que l'affichage de la liste de tâches présélectionnée est déclenché par une troisième touche (31) dudit terminal, ladite touche, dans l'état actif, permettant d'afficher à nouveau la liste en cours si son traitement a été interrompu pour activer un autre moyen d'exploitation (105).

4. Procédé selon l'une des revendications 2 et 3,
caractérisé en ce qu'il comprend l'affichage des commentaires détaillés concernant la liste de tâches présente à l'écran de visualisation (8), ledit affichage étant déclenché par une quatrième touche (18) dudit terminal.

5. Procédé selon l'une des revendications 2 à 4,
caractérisé en ce qu'il comprend le report de l'exécution de la tâche désignée par ledit marqueur (55), déclenché par une cinquième touche (14) dudit terminal, ledit report consistant à déplacer ledit marqueur (55) pour désigner la tâche suivante, à afficher un autre marqueur (63) repérant la tâche reportée, et simultanément, à rendre activable une sixième touche (12) pour permettre la validation de toutes les tâches reportées, les unes après les autres, et suivant l'ordre dans lequel elles ont été reportées.

6. Procédé selon la revendication 5,
caractérisé en ce que le déroulement du traitement d'une liste de tâches peut être bloqué par le processeur (2), lorsque la situation de l'aérodyne impose que toutes les tâches reportées soient exécutées, et qu'au moins une tâche a été reportée.

7. Procédé selon l'une des revendications 2 à 6,
caractérisé en ce qu'un indicateur d'état (46) est associé à la troisième touche (31), pour indiquer à tout instant si une liste de tâches est en cours de traitement ou non, quelque soit la page affichée sur l'écran (8) dudit terminal (4,5,6).

8. Procédé selon l'une des revendications 2 à 7,
caractérisé en ce qu'il comprend l'affichage d'un indicateur particulier (66), à proximité de la troisième touche (31), dans le but d'inciter l'opérateur à déclencher l'affichage de cette liste de tâches, lorsqu'un événement anormal comme une panne, est survenu.

9. Procédé selon l'une des revendications précédentes,
caractérisé en ce qu'il comprend les étapes suivantes :
- l'initialisation du contexte du vol, consistant à saisir, à l'aide dudit terminal (4,5,6), des références d'aéroports pour désigner les trois aéroports du vol, à savoir l'aéroport de départ, de destination et éventuellement, de dégagement ;
- la présélection, par le processeur (2), d'ensembles d'informations concernant ces trois aéroports ;
- la sélection, par l'opérateur, d'un de ces trois aéroports ;
- la présentation, par le processeur (2), de la liste des titres des ensembles d'informations présélectionnés concernant l'aéroport sélectionné, permettant ainsi à l'opérateur de choisir l'ensemble qu'il veut consulter ;
- la sélection, par l'opérateur, de l'ensemble qu'il désire consulter ;
- l'affichage page par page, par le système, de l'ensemble sélectionné, avec la possibilité pour l'opérateur d'afficher les pages suivante et précédente, et d'afficher à nouveau la liste des titres des ensembles en vue de la visualisation d'un autre ensemble.

10. Procédé selon l'une des revendications précédentes,
caractérisé en ce qu'il comprend la mémorisation, sur commande de l'opérateur, de la page affichée à l'écran (8), dans un espace mémoire prévu à cet effet, accessible rapidement et facilement.

11. Procédé selon la revendication 10,
caractérisé en ce que ledit espace mémoire comprend plusieurs subdivisions, une première étant affectée à l'aéroport de départ, une seconde à l'aéroport de destination, une troisième à l'aéroport de dégagement.

12. Procédé selon la revendication 11,
caractérisé en ce que ledit système comprend plusieurs terminaux (4,5,6), ledit espace mémoire comprenant d'autres subdivisions affectées à une page quelconque, et associées respectivement aux terminaux (4,5,6).

13. Procédé selon la revendication 12,
caractérisé en ce que la mémorisation de la page affichée à l'écran d'un des terminaux (4,5,6) dans l'une des trois premières subdivisions ou dans la subdivision qui lui est associée, dépend du contenu de ladite page et est déclenchée par une septième touche (15) du terminal, (4,5,6).

14. Procédé selon l'une des revendications 12 et 13,
caractérisé en ce qu'il comprend la mémorisation de la page affichée à l'écran dans la subdivision associée au terminal lorsque ladite page ne concerne aucun des trois aéroports du vol, ladite mémorisation étant déclenchée par la susdite septième touche (15).

15. Procédé selon l'une des revendications 12 à 14,
caractérisé en ce qu'il comprend l'affichage à l'écran (8) d'un des terminaux (4,5,6), du contenu des trois premières subdivisions et de la subdivision spécifique du terminal, cet affichage étant déclenché par une huitième touche (23) dudit terminal, l'affichage du contenu des subdivisions associées respectivement aux autres terminaux n'étant pas autorisée.

16. Procédé selon la revendication 15,
caractérisé en ce que, lors dudit affichage, le contenu d'une subdivision est présenté par ordre d'importance décroissante.

17. Procédé selon l'une des revendications 15 et 16,
caractérisé en ce que, simultanément à l'affichage à l'écran (8) d'une page mémorisée dans une subdivision, il comprend l'affectation de la susdite septième touche (15) à la suppression de ladite page de la subdivision où elle est mémorisée, jusqu'à l'affichage d'une page qui n'est pas déjà mémorisée dans une subdivision, afin d'interdire la mémorisation de la même page plusieurs fois.

18. Procédé selon l'une des revendications 11 à 17,
caractérisé en ce qu'il comprend la mémorisation de la page affichée à l'écran (8) dans une quatrième subdivision affectée à une page quelconque, ladite mémorisation étant déclenchée par une neuvième touche (28) dudit terminal.

19. Procédé selon la revendication 18,
caractérisé en ce qu'il comprend l'affichage sur l'un quelconque des terminaux (4,5,6), du contenu de la quatrième subdivision, ledit affichage étant déclenché par une dixième touche (29) dudit terminal.

20. Dispositif mettant en oeuvre le procédé selon l'une des revendications précédentes,
caractérisé en ce qu'il comprend :
- un processeur (2) connecté aux autres équipements électroniques (101) embarqués à bord de l'aérodyne,
- au moins un terminal (4,5,6) de communication homme / machine connecté au processeur (2), et comportant un écran de visualisation (8) et des touches de commande et de saisie (9 à 44), et
- des mémoires (3) accessibles par le processeur (2), où sont stockées sous la forme d'une base de données, notamment toutes les informations utiles à la conduite d'un vol et en particulier celles qui sont requises pour effectuer un vol conformément à la réglementation aérienne,
le processeur (2) comprenant :
- des premiers moyens (105) d'exploitation des informations de la base de données,
- des capteurs (101) pour acquérir en temps réel au moins un événement relatif à la situation actuelle de l'aérodyne,
- des moyens pour analyser (103) la situation nouvelle (102) engendrée par l'arrivée de cet événement dans le contexte où se trouve l'aérodyne ;
- des moyens (104) pour présélectionner les informations de la base de données les mieux adaptées à la nouvelle situation et les classer par ordre de pertinence par rapport cette situation ;
- des seconds moyens d'exploitation (105) des informations présélectionnées et classées.

21. Terminal de communication homme/machine faisant partie du dispositif selon la revendication 20, caractérisé en ce qu'il comprend un écran de visualisation (8) et des touches (9 à 44) pouvant présenter différentes fonctions, notamment pour saisir des informations ou pour effectuer des commandes, et en ce que les susdites touches (9 à 44) sont réparties à la périphérie de l'écran (8) en quatre ensembles de touches successives, le premier ensemble (21 à 31) étant affecté à l'activation des moyens d'exploitation (105), le deuxième ensemble (32 à 42) permettant de procéder à des sélections lorsqu'un menu est affiché à l'écran, le troisième ensemble (13 à 20) étant affecté aux fonctions de gestion du terminal, et le quatrième ensemble (9 à 12) permettant de visualiser les dernières sélections effectuées par l'opérateur et de les réactiver, les susdites touches (9 à 44) étant reconfigurables en fonction de la page affichée à l'écran (8), et étant chacune associées à une zone adjacente de l'écran où peut être affichée la fonction qui leur est affectée.

22. Terminal selon la revendication 21,
caractérisé en ce que chacune desdites touches (9 à 44) peut prendre l'un des trois états, actif, activable ou inactivable qui correspond à l'état de la fonction déclenchée par la touche, et est associée à un indicateur d'état (45, 46).

23. Terminal selon l'une des revendications 21 et 22,
caractérisé en ce ledit écran de visualisation (8) comprend quatre bords le long desquels sont disposés respectivement les quatre susdits ensembles de touches.

24. Terminal selon l'une des revendications 21 à 23,
caractérisé en ce qu'il comprend une touche (42) qui permet de remonter une arborescence d'enchaînement de menus.

25. Terminal selon l'une des revendications 22 à 24,
caractérisé en ce que les touches (9 à 12) permettant de visualiser les dernières sélections, sont associées respectivement à une zone de l'écran (8) où figure respectivement les libellés de ces sélections, la touche (9) associée à la dernière sélection étant inactivable, et les autres touches (10, 11, 12) pouvant être activables et permettant d'afficher la dernière page visualisée concernant la sélection correspondante, indépendamment de l'arborescence d'enchaînement des menus.

## Patentansprüche

1. Verfahren zur Unterstützung der Steuerung eines Aerodyns, das von einem System ausgeführt wird, welches einen Prozessor (2), wenigstens ein Terminal (4, 5, 6) zur Kommunikation Mensch/Maschine mit einem Anzeigebildschirm (8) und Tasten (9 bis 44) zur Steuerung und zur Erfassung, sowie Speicher (3) umfasst, in denen vornehmlich all diejenigen Informationen, die für die Durchführung eines Flugs nützlich sind, und insbesondere diejenigen gespeichert sind, die zur Durchführung eines Flugs gemäss den Luftfahrtbestimmungen erforderlich sind, wobei das System mit anderen elektronischen Anlagen (101) verbunden ist, die an Bord des Aerodyns untergebracht sind,
dadurch gekennzeichnet, dass das Verfahren die folgenden Schritte umfasst :
- Erfassung der Informationen und Speichern derselben in den Speichern (3) in Form einer Datenbank, und Bereitstellung erster Mittel (105) zur Auswertung dieser Informationen für die Bedienungsperson über das Terminal (4, 5, 6) ;
- Echtzeiterfassung wenigstens eines Ereignisses bezüglich der aktuellen Situation des Aerodyns durch den Prozessor (2) und Analyse der neuen Situation (102), die durch das Eintreten dieses Ereignisses entsteht, im Zusammenhang mit der Position des Aerodyns ;
- Vorauswahl der Informationen aus der Datenbank, die am besten an die neue Situation angepasst sind, und deren Klassifizierung durch den Prozessor (2) in der Reihenfolge ihrer Relevanz im Zusammenhang mit dieser Situation ;
- Bereitstellung zweiter Mittel (105) zur Auswertung der vorab ausgewählten und klassifizierten Informationen für die Bedienungsperson durch das Terminal ;
- Wahl eines der Auswertungsmittel (105) und eines Teils der vorab ausgewählten Informationen durch die Bedienungsperson ; und
- Auswertung des ausgewählten Teils der Informationen auf dem Anzeigebildschirm (8) durch die Bedienungsperson mit Hilfe des gewählten Auswertungsmittels.

2. Verfahren nach Anspruch 1, dadurch gekennzeichnet, dass die Datenbank eine Vielzahl von Tasklisten aufweist, wobei jede Liste für eine bestimmte Situation alle auszuführenden Tasks und ihre Reihenfolge anzeigt und das Verfahren umfasst :
- die Vorauswahl der am besten an die Situation des Aerodyns angepassten Taksliste ;
- die Anzeige der vorab ausgewählten Liste auf dem Bildschirm (8) des Terminals (4, 5, 6) durch den Prozessor (2) auf Befehl der Bedienungsperson ;
- die Aktivierung einer ersten Taste (20), welche die Positionierung eines Zeigers (55) erlaubt, der die erste auszuführende Task der auf dem Bildschirm (8) angezeigten Liste angibt, durch den Prozessor (2) , was den Beginn der Verarbeitung der Liste bewirkt ; und
- Verarbeitung der Liste, in deren Verlauf der Zeiger (55) sich von einer Task zur nächsten bewegt, und in deren Verlauf die Bedienungsperson eine zweite Taste (43) des Terminals betätigen muss, um die durch den Zeiger (55) angegebene Task zu bestätigen, wenn diese ausgeführt wird, wobei der Zeiger (55) dann die nächste Task angibt.

3. Verfahren nach Anspruch 2, dadurch gekennzeichnet, dass die Anzeige der vorab ausgewählten Taskliste durch eine dritte Taste (31) des Terminals ausgelöst wird, wobei diese Taste im aktiven Zustand die erneute Anzeige der aktuellen Liste erlaubt, wenn ihre Verarbeitung unterbrochen wurde, um ein anderes Auswertungsmittel (105) zu aktivieren.

4. Verfahren nach einem der Ansprüche 2 und 3, dadurch gekennzeichnet, dass es die Anzeige der detaillierten Kommentare erlaubt, welche die auf dem Anzeigebildschirm (8) vorhandene Taskliste betrifft, wobei die Anzeige durch eine vierte Taste (18) des Terminals ausgelöst wird.

5. Verfahren nach einem der Ansprüche 2 bis 4, dadurch gekennzeichnet, dass es die Meldung über die Ausführung der durch den Zeiger (55) angegebenen Task umfasst, die durch eine fünfte Taste (14) des Terminals ausgelöst wird, wobei die Meldung darin besteht, dass der Zeiger (55) verschoben wird, um die nächste Task anzugeben, dass ein anderer Zeiger (63) angezeigt wird, der die gemeldete Task kennzeichnet, und dass gleichzeitig eine sechste Taste (12) aktivierbar wird, um die Bestätigung aller gemeldeten Tasks nacheinander und in der Reihenfolge, in der sie gemeldet wurden, zu ermöglichen.

6. Verfahren nach Anspruch 5, dadurch gekennzeichnet, dass der Ablauf der Verarbeitung einer Taskliste durch den Prozessor (2) blockiert werden kann, wenn die Situation des Aerodyns es erforderlich macht, dass alle gemeldeten Tasks auszuführen sind und wenn wenigstens eine Task gemeldet wurde.

7. Verfahren nach einem der Ansprüche 2 bis 6, dadurch gekennzeichnet, dass eine Zustandsanzeige (46) der dritten Taste (31) zugewiesen ist, um zu jedem Zeitpunkt anzuzeigen, ob gerade eine Taskliste verarbeitet wird oder nicht, umabhängig davon, welche Seite auf dem Bildschirm (8) des Terminals (4, 5, 6) angezeigt wird.

8. Verfahren nach einem der Ansprüche 2 bis 7, dadurch gekennzeichnet, dass es die Anzeige eines besonderen Indikators (66) in der Nähe der dritten Taste (31) umfasst, mit dem Ziel, die Bedienungsperson zum Auslösen der Anzeige dieser Taskliste zu veranlassen, wenn ein anormales Ereignis, wie eine Panne, eingetreten ist.

9. Verfahren nach einem der vorhergehenden Ansprüche, dadurch gekennzeichnet, dass es die folgenden Schritte umfasst :
- Initialisierung der Zustandsanzeige des Flugs, wobei mit Hilfe des Terminals (4, 5, 6) Bezugsgrössen von Flughäfen erfasst werden, um die drei Flughäfen des Fluges zu benennen, nämlich den Heimat-, den Bestimmungs- und gegebenenfalls den Ausweichflughafen ;
- Vorauswahl von Informationsgruppen, die diese drei Flughäfen betreffen, durch den Prozessor (2) ;
- Auswahl eines dieser drei Flughäfen durch die Bedienungsperson ;
- Darstellung der Titelliste der vorausgewählten Informationsgruppen, die den ausgewählten Flughafen betreffen, durch den Prozessor (2), was der Bedienungsperson die Auswahl der Gruppe ermöglcht, die sie abfragen möchte ;
- Auswahl der abzufragenden Gruppe durch die Bedienungsperson ;
- Anzeige der ausgewählten Gruppe durch das System, und zwar Seite für Seite, mit der Möglichkeit für die Bedienungsperson, die nächste oder die vorherige Seite anzuzeigen und die Titelliste der Gruppen im Hinblick auf die Anzeige einer anderen Gruppe erneut anzuzeigen.

10. Verfahren nach einem der vorhergehenden Ansprüche, dadurch gekennzeichnet, dass es das Speichern der auf dem Bildschirm (8) angezeigten Seite in einem zu diesem Zweck vorgesehenen schnell und leicht zugänglichen Speicherpatz auf Befehl der Bedienungsperson umfasst.

11. Verfahren nach Anspruch 10, dadurch gekennzeichnet, dass der Speicherplatz mehrere Untereinheiten umfasst, wobei eine erste dem Heimafflughafen, eine zweite dem Bestimmungsflughafen und eine dritte dem Ausweichflughafen zugewiesen ist.

12. Verfahren nach Anspruch 11, dadurch gekennzeichnet, dass das System mehrere Terminals (4, 5, 6) umfasst, wobei der Speicherplatz andere Untereinheiten aufweist, die irgendeiner Seite zugeordnet und in entspechender Weise den Terminals (4, 5, 6) zugewiesen sind.

13. Verfahren nach Anspruch 12, dadurch gekennzeichnet, dass das Speichern der auf dem Bildschirm eines der Terminals (4, 5, 6) angezeigten Seite in einer der drei ersten Untereinheiten oder in der Untereinheit, die ihr zugewiesen ist, von dem Inhalt der Seite abhängt und durch eine siebte Taste (15) des Terminals (4, 5, 6) ausgelöst wird.

14. Verfahren nach einem der Ansprüche 12 und 13, dadurch gekennzeichnet, dass es das Speichern der auf dem Bildschirm angezeigten Seite in der dem Terminal zugewiesenen Untereinheit umfasst, wenn die Seite keinen der drei Flughäfen des Fluges betrifft, wobei das Speichern durch die oben erwähnte, siebte Taste (15) ausgelöst wird.

15. Verfahren nach einem der Ansprüche 12 bis 14, dadurch gekennzeichnet, dass es die Anzeige des Inhaltes der drei ersten Untereinheiten und der spezifisichen Untereinheit des Terminals auf dem Bildschirm (8) eines der Terminals (4, 5, 6) umfasst, wobei diese Anzeige durch eine achte Taste (23) des Terminals ausgelöst und die Anzeige des Inhalts der jeweils den anderen Terminals zugeordneten Untereinheiten nicht zugelassen wird.

16. Verfahren nach Anspruch 15, dadurch gekennzeichnet, dass bei der Anzeige der Inhalt einer Untereinheit, nach Wichtigkeit absteigend geordnet, dargestellt wird.

17. Verfahren nach einem der Ansprüche 15 und 16, dadurch gekennzeichnet, dass es gleichzeitig mit der Anzeige einer in einer Untereinheit gespeicherten Seite auf dem Bildschirm (8) die Zuweisung der oben erwähnten siebten Taste (15) zur Unterdrückung der Seite der Untereinheit, in der sie gespeichert ist, bis zur Anzeige einer noch nicht in einer Untereinheit gespeicherten Seite umfasst, um das mehrmalige Speichern ein- und derselben Seite zu verhindern.

18. Verfahren nach einem der Ansprüche 11 bis 17, dadurch gekennzeichnet, dass es das Speichern der auf dem Bildschirm (8) angezeigten Seite in einer vierten Untereinheit umfasst, die irgendeiner Seite zgewiesen ist, wobei das Speichern durch eine neunte Taste (28) des Terminals ausgelöst wird.

19. Verfahren nach Anspruch 18, dadurch gekennzeichnet, dass es die Anzeige des Inhaltes der vierten Untereinheit auf irgendeinem der Terminals (4, 5, 6) umfasst, wobei die Anzeige durch eine zehnte Taste (29) des Terminals ausgelöst wird.

20. Vorrichtung zur Durchführung des Verfahrens nach einem der vorhergehenden Ansprüche, dadurch gekennzeichnet, dass sie umfasst :
- einen Prozessor (2), der mit den anderen elektronischen Anlagen (101) verbunden ist, die an Bord des Aerodyns untergebracht sind ;
- wenigstens ein Terminal (4, 5, 6) zur Kommunikation Mensch/Maschine, das mit dem Prozessor (2) verbunden ist und einen Anzeigebildschirm (8), sowie Tasten (9 bis 44) zur Steuerung und zur Erfassung ; und
- Speicher (3), auf die der Prozessor (2) zurückgreifen kann und in denen in Form einer Datenbank vornehmlich all diejenigen Informationen, die für die Durchführung eines Flugs nützlich sind, und insbesondere diejenigen gespeichert sind, die zur Durchführung eines Flugs gemäss den Luftfahrtsbestimmungen benötigt werden,
wobei der Prozessor 2) umfasst :
- erste Mittel (105) zur Auswertung der Informationen der Datenbank,
- Sensoren (101) zur Echtzeiterfassung wenigstens eines Ereignisses bezüglich der aktuellen Situation des Aerodyns,
- Mittel (103) zum Analysieren der neuen Situation (102), die durch das Eintreten dieses Ereignisses entsteht, im Zusammenhang mit der Position des Aerodyns,
- Mittel (104) zur Vorauswahl der Informationen der Datenbank, die am besten an die neue Situation angepasst sind, und zu deren Klassifizierung in der Reihenfolge ihrer Relevanz bezüglich dieser Situation ;
- zweite Mittel (105) zur Auswertung der zuvor ausgewählten und klassifizierten Informationen.

21. Terminal zur Kommunikation Mensch/Maschine, das Teil der Vorrichtung nach Anspruch 20 ist, dadurch gekennzeichnet, dass es einen Anzeigebildschirm (8) und Tasten (9 is 44) umfasst, die verschiedene Funktionen aufweisen können, insbesondere zur Erfassung der Informationen oder zur Ausführung der Befehle, und ferner dadurch gekennzeichnet ist, dass die oben erwähnten Tasten (9 bis 44) am Rand des Bildschirm (8) in vier aufeinanderfolgenden Tastengruppen verteilt sind, wobei die erste Gruppe (21 bis 31) der Aktivierung der Auswertungsmittel (105) zugeordnet ist, die zweite Gruppe (32 bis 42) das Übergehen zu Auswahlen erlaubt, wenn ein Menü auf dem Bildschirm angezeigt wird, die dritte Gruppe (13 bis 20) den Steuerfunktionen des Terminals zugewiesen ist, und die vierte Gruppe (9 bis 12) die Anzeige der zuletzt von der Bedienungsperson ausgeführten Auswahlen und deren Reaktivierung erlaubt, wobei die erwähnten Tasten (9 bis 44) in Abhängigkeit von der auf dem Bildschirm (8) angezeigten Seite neu konfigurierbar sind und jeweils einer benachbarten Zone des Bildschirms zugeordnet sind, in der die Funktion angezeigt werden kann, die ihnen zugewiesen ist.

22. Terminal nach Anspruch 21, dadurch gekennzeichnet, dass jede der erwähnten Tasten (9 bis 44) einen der drei Zustände aktiv, aktivierbar oder nicht aktivierbar annehmen kann, der dem Zustand der durch die Taste ausgelösten Funktion entspricht, und sie einer Zustandsanzeige (45, 46) zugeordnet ist.

23. Terminal nach einem der Ansprüche 21 und 22, dadurch gekennzeichnet, dass der Anzeigebildschirm (8) vier Ränder umfasst, entlang derer jeweils die vier erwähnten Tastengruppen angeordnet sind.

24. Terminal nach einem der Ansprüche 21 bis 23, dadurch gekennzeichnet, dass es eine Taste (42) umfasst, die es erlaubt, der Baumstruktur einer Menüverknüpfung zu folgen.

25. Terminal nach einem der Ansprüche 22 bis 24, dadurch gekennzeichnet, dass die Tasten (9 bis 12), welche die Anzeige der letzten Auswahlen erlauben, einer Zone des Bildschirms (8) in der jeweils die Beschriftungen dieser Auswahlen erscheinen, entsprechend zugeordnet sind, wobei die der letzten Auswahl zugeordnete Taste (9) nicht aktivierbar ist und die anderen Tasten (10, 11, 12) aktivierbar sein können und die Anzeige der letzten dargestellten Seite, welche die entsprechende Auswahl betrifft, unabhängig von der Baumstruktur der Menüverknüpfung erlauben.

## Claims

1. Method for assisting the piloting of an aerodyne and implemented by a system including a processor (2), at least one man/machine communication terminal (4, 5, 6) comprising a display screen (8) and control and data entry keys (9 to 44) and memories (3) where is stored in particular all the information useful to operating a flight and in particular that required to conduct a flight in accordance with air regulations, the system being connected to the other items of electronic equipment (101) embarked on the aerodyne,
characterized in that said method includes the following stages :
- the entering and classification in the memories (3) of said information in the form of a data base, the operator being provided by the terminal (4, 5, 6) with first means for exploiting this information (105) ;
- the processor (2) acquiring in real time at least one event relating to the current situation of the aerodyne and analysis of the new situation (102) generated by the arrival of this event in the context where the aerodyne is located ;
- the processor (2) preselecting from the data base the information most suitably adapted to the new situation and their classification by order of relevance with respect to this situation ;
- the terminal providing the operator with second means (105) for exploiting the preselected classified information ;
- the selection by the operator of one of the exploitation means (105) and one portion of said preselected infomation, and
- the exploitation on the display screen (8) by the operator of the portion of the preselected information with the aid of the selected exploitation device.

2. Method according to claim 1,
characterized in that the data base includes a plurality of lists of tasks, each list indicating for a specific situation all the tasks to be carried out and their sequencing, said method including :
- the preselection of the list of tasks best adapted to the situation of the aerodyne,
- the displaying as ordered by the operator by the processor (2) on the screen (8) of said terminal (4, 5, 6) of the preselected list,
- the activation by the processor (2) of a first key (20) making it possible to position a marker (55) which designates the first task to be carried out from the list displayed on the screen (8), thus provoking the launching of processing of the list, and
- the processing of the list during which said marker (55) moves from one task to another and during which the operator needs to activate a second key (43) of said terminal so as to validate the task designated by said marker (55) when the latter is executed, the marker (55) then designating the next task.

3. Method according to claim 2,
characterized in that the displaying of the preselected list of tasks is triggered by a third key (31) of said terminal, said key in the active state making it possible to again display the current list if its processing has been interrupted so as to activate another exploitation device (105).

4. Method according to one of claims 2 and 3,
characterized in that it includes the displaying of detailed comments concerning the list of tasks present on the display screen (8), said display being triggered by a fourth key (18) of said terminal.

5. Method according to one of claims 2 to 4,
characterized in that it includes the carry of execution of the task designated by said marker (55), triggered by a fifth key (14) of said terminal, said carry consisting of moving said marker (55) so as to designate the next task, displaying another marker (63) marking said carried task, and simultaneously rendering activable a sixth key (12) so as to allow for validation of all the carried tasks one after the other and according to the order in which they have been carried.

6. Method according to claim 5,
characterized in that the execution of the processing of a list of tasks may be blocked by the processor (2) when the situation of the aerodyne requires that all the carried tasks be executed and when at least one task has been carried.

7. Method according to one of claims 2 to 6,
characterized in that a state indicator (46) is associated with the third key (31) so as to indicate at any moment whether or not a list of tasks is currently being processed, irrespective of the page displayed on the screen (8) of said terminal (4, 5 6).

8. Method according to one of claims 2 to 7,
characterized in that it includes the displaying of a special indicator (66) close to the third key (31) with the aim of inducing the operator to trigger the displaying of this list of tasks when an abnormal event has occured, such as a malfunction.

9. Method according to one of the preceding claims,
characterized in that it includes the following stages :
- the initialization of the context of the flight consisting of entering by means of said terminal (4, 5, 6) airport references for designating the three airports of the flight, namely the departure airport, the destination airport and possibly the alternate airport;
- the preselection by the processor (2) of sets of information concerning these three airports ;
- the operator selecting one of these three airports:
- the presentation by the processor (2) of the list of the titles of the preselected sets of information concerning the selected airport, thus enabling the operator to select the set he wishes to consult ;
- the selection by the operator of the set he wishes to consult ;
- the displaying page by page by the system of the selected set with the operator having the possibility of displaying the next and preceding pages and again display the list of the titles of the sets so as to allow for displaying another set.

10. Method according to one of the preceding claims,
characterized in that it includes the storing as ordered by the operator of the page displayed on the screen (8) inside an easily and quickly accessible storage space provided to this effect,

11. Method according to claim 10,
characterized in that said memory space includes several subdivisions, one first subdivision being allocated to the departure airport, a second to the destination airport and a third to the alternate airport.

12. Method according to claim 11,
characterized in that said system includes several terminals (4, 5, 6), said memory space including other subdivisions allocated to any page and respectively associated with the terminals (4, 5, 6).

13. Method according to claim 12,
characterized in that the storing of the page displayed on the screen of one of the terminals (4, 5, 6) in one of the first three subdivisions or in the subdivision associated with it depends on the contents of said page and is triggered by a seventh (15) key of the terminal (4, 5, 6).

14. Method according to one of claims 12 and 13.
characterized in that it includes the storage of the page displayed on the screen in the subdivision associated with the terminal when said page does not concern any of the three airports of the flight, said storage being triggered by said seventh key (15).

15. Method according to one of claims 12 to 14,
characterized in that it includes the displaying on the screen (8) of one of the terminals (4, 5, 6) the contents of the first three subdivisions and the specific subdivision of the terminal, this display being triggered by an eighth key (23) of said terminal, the displaying of the contents of the subdivisions respectively associated with the other terminals not being authorized.

16. Method according to claim 15,
characterized in that, during said displaying the contents of a subdivision is presented by order of decreasing importance.

17. Method according to one of claims 15 and 16,
characterized in that, at the same time as displaying on the screen (8) a page stored in a subdivision, it includes the allocation of said seventh key (15) for suppressing said page of the subdivision where it is stored until a page is displayed which is not already stored in a subdivision so as to prohibit the storing of the same page more than once.

18. Method according to one of claims 11 to 17,
characterized in that it includes the storing of the page displayed on the screen (8) in a fourth subdivision allocated to any page, said storing being triggered by a ninth key (28) of said terminal.

19. Method according to claim 18,
characterized in that it includes the displaying on any of the terminals (4, 5, 6) of the contents of the fourth subdivision, said display being triggered by a tenth key (29) of said terminal.

20. Device for implementing the method according to one of the preceding claims,
characterized in that it includes :
- a processor (2) connected to the other items of electronic equipment (101) embarked on the aerodyne,
- at least one man/machine communication terminal (4. 5. 6) connected to the processor (2) and comprising a display screen (8) and control and data entry keys (9 to 44), and
- memories (3) accessible by the processor (2) where in particular all the information useful for the conducting of a flight and the information required to conduct a flight in accordance with air regulations is stored in the form of a data base,
the processor (2) including :
- first means (105) for exploiting the information of the data base,
- sensors (101) for acquiring in real time at least one event relating to the current situation of the aerodyne,
- means (103) to analyse the new situation (102) generated by the arrival of this event in the context where the aerodyne is located ;
- means (104) to preselect the data base information best adapted to the new situation and classify it by order of importance with respect to this situation ;
- second means (105) for exploiting the classified preselected information.

21. Man/machine communication terminal forming part of the device according to claim 20,
characterized in that it includes a display screen (8) and keys (9 to 44) able to have various functions, especially to enter information or carry out commands, and in that said keys (9 to 44) are divided at the periphery of the screen (8) into four sets of successive keys, the first set (21 to 31) being allocated to activation of the exploitation means (105), the second set (32 to 42) making it possible to carry out selections when a menu is displayed on the screen, the third set (13 to 29) being allocated to the management functions of the terminal, and the fourth set (9 to 12) making it possible to display the last selections made by the operator and reactivate them, said keys (9 to 44) being reconfigurable according to the page displayed on the screen (8) and each being associated with an adjacent zone of the screen where the function allocated to them can be displayed.

22. Terminal according to claim 21,
characterized in that each of said keys (9 to 44) may assume one of three states, namely active, activable or nonactivable which corresponds to the state of the function triggered by the key and is associated with a state indicator (45, 46).

23. Terminal according to one of claims 21 and 22, characterized in that said display screen (8) includes four edges along which said four sets of keys are respectively disposed.

24. Terminal according to one of claims 21 to 23, characterized in that it includes a key (42) making it possible to follow a menu chaining tree structure.

25. Terminal according to one of claims 22 to 24, characterized in that the keys (9 to 12) allowing for displaying of the last selections are respectively associated with one zone of the screen (8) where the wordings of these selections are featured, the key (9) associated with the last selection being nonactivable and the other keys (10, 11, 12) being able to be activable and making it possible to display the last page displayed concerning the corresponding selection independently of the chaining tree structure of the menus.
